(19) Europäisches Patentamt
European Patent Office
Office européen des brevets

(11) **EP 3 168 317 A1**

(12) **EUROPEAN PATENT APPLICATION**
published in accordance with Art. 153(4) EPC

(43) Date of publication:
**17.05.2017 Bulletin 2017/20**

(21) Application number: **15818354.1**

(22) Date of filing: **18.03.2015**

(51) Int Cl.:
*C22C 38/00* (2006.01)    *B22F 1/00* (2006.01)
*B22F 3/15* (2006.01)    *C22C 38/50* (2006.01)
*G21D 1/00* (2006.01)

(86) International application number:
**PCT/JP2015/057971**

(87) International publication number:
**WO 2016/006280 (14.01.2016 Gazette 2016/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **07.07.2014 JP 2014139282**

(71) Applicant: **Hitachi, Ltd.**
**Chiyoda-ku**
**Tokyo 100-8280 (JP)**

(72) Inventors:
• **ISHIZAKI Takahiro**
**Tokyo 100-8280 (JP)**
• **KANEDA Junya**
**Tokyo 100-8280 (JP)**

(74) Representative: **Beetz & Partner mbB**
**Patentanwälte**
**Steinsdorfstraße 10**
**80538 München (DE)**

(54) **AUSTENITIC STAINLESS STEEL AND METHOD FOR PRODUCING SAME**

(57)    An object of the present invention is to provide austenitic stainless steel having a high strength and high corrosion resistance while improving resistance to irradiation and reducing irradiation-induced stress corrosion cracking. A solution is as follows. Austenitic stainless steel of the present invention contains Cr: 16 to 26%, Ni: 8 to 22%, O: 0.02 to 0.4%, C: 0.08% or less, and N: 0.1% or less by weight, and further contains at least one kind of Zr: 0.2 to 2.8%, Ta: 0.4 to 5.0%, and Ti: 0.2 to 2.6%, the balance being Fe and unavoidable impurities, wherein Zr, Ta, and Ti are precipitated as precipitates of one or more kinds of oxide particles, carbide particles, nitride particles, and composite particles thereof.

## FIG. 1

## Description

Technical Field

The present invention relates to dispersion-strengthened austenitic stainless steel, and more particularly to highly irradiation-resistant austenitic stainless steel applicable to a reactor internal structure used under a neutron irradiation environment.

Background Art

Austenitic stainless steel has high corrosion resistance under a corrosive environment due to a Cr passive film formed on the surface thereof. Austenitic stainless steel is frequently used as a component of a structural material, and is often used also in a nuclear power plant. However, the following possibility has been pointed out. That is, under a high-temperature, high-pressure water environment such as in a reactor, stress corrosion cracking occurs, and furthermore, the stainless steel is irradiated with neutrons within the reactor and an irradiation defect is introduced. As a result, Cr deficiency occurs at a crystal grain boundary, leading to irradiation-induced stress corrosion cracking. Therefore, in order to lower the susceptibility to irradiation-induced stress corrosion cracking, development of a material having excellent resistance to irradiation and stress corrosion cracking is required.

PTL 1 describes that corrosion resistance, strength, and resistance to irradiation are improved by using austenitic stainless steel having an average crystal grain diameter of 1 $\mu$m or less and containing at least one kind selected from Ti at 1.0% or less, Zr at 2.0% or less, and Nb at 1.0% or less.

PTL 2 describes ferritic stainless steel in which toughness and workability as well as strength are improved by bulking powder having an ultrafine grain structure obtained by mechanical alloying or the like while maintaining the structure.

Citation List

Patent Literature

PTL 1: JP 8-337853 A
PTL 2: JP 2002-285289 A

Summary of Invention

Technical Problem

A purpose of the austenitic stainless steel described in PTL 1 is to improve corrosion resistance, strength, and resistance to irradiation by making crystal grains finer, and to improve strength and resistance to stress corrosion cracking by forming oxides and carbides by Ti, Zr, or Nb. Meanwhile, an element additive amount relative to the amount of oxygen and carbon is not clear, and there may be a risk of a decrease in mechanical strength due to the formation of an intermetallic compound and residual oxygen and carbon. In addition, the ferritic stainless steel described in PTL 2 largely improves toughness by stabilizing oxygen, which adversely affects the mechanical properties of steel, by forming an oxide of the added element. Meanwhile, since the parent phase is a ferrite phase, there is a concern about corrosion resistance under the environment inside a reactor.

There is a problem with the fact that, while austenitic stainless steel is excellent in corrosion resistance, irradiation-induced stress corrosion cracking may occur under an irradiation environment. Ferrite martensitic oxide dispersion-strengthened steel has been developed as a material having excellent resistance to irradiation, but still has a problem with corrosion resistance under the environment inside a reactor.

An object of the present invention is to provide austenitic stainless steel having a high strength and high corrosion resistance while improving resistance to irradiation and reducing irradiation-induced stress corrosion cracking.

Solution to Problem

Austenitic stainless steel of the present invention contains Cr: 16 to 26%, Ni: 8 to 22%, O: 0.02 to 0.4%, C: 0.08% or less, and N: 0.1% or less by weight, and further contains at least one kind of Zr: 0.2 to 2.8%, Ta: 0.4 to 5.0%, and Ti: 0.2 to 2.6%, the balance being Fe and unavoidable impurities, wherein Zr, Ta, and Ti are precipitated as precipitates of one or more kinds of oxide particles, carbide particles, nitride particles, and composite particles thereof.

A method for producing austenitic stainless steel of the present invention includes: alloying, through mechanical alloying treatment, alloy powder containing Cr: 16 to 26%, Ni: 8 to 22%, O: 0.02 to 0.4%, C: 0.08% or less, and N: 0.1% or less by weight, and further containing at least one kind of Zr: 0.2 to 2.8%, Ta: 0.4 to 5.0%, and Ti: 0.2 to 2.6%, the balance being Fe and unavoidable impurities, or mixed powder satisfying the composition; encapsulating the powder in a container under vacuum; and solidifying and molding the powder at 800°C to 1200°C.

Advantageous Effects of Invention

According to the present invention, austenitic stainless steel having a high strength and high corrosion resistance while improving resistance to irradiation and reducing irradiation-induced stress corrosion cracking, and a method for producing the austenitic stainless steel can be provided.

Brief Description of Drawings

[FIG. 1] FIG. 1 shows structure observation results of a material of the present invention.
[FIG. 2] FIG. 2 shows irradiation test results of the material of the present invention.
[FIG. 3] FIG. 3 is a view showing a reactor control rod to which the material of the present invention is applied.

Description of Embodiments

The structure, composition and production conditions of austenitic stainless steel of the present invention will be described below. The austenitic stainless steel of the present invention has the following basic composition. The austenitic stainless steel contains Cr: 16 to 26%, Ni: 8 to 22%, O: 0.02 to 0.4%, C: 0.08% or less, and N: 0.1% or less by weight, and further contains at least one kind of Zr: 0.2 to 2.8%, Ta: 0.4 to 5.0%, and Ti: 0.2 to 2.6%, the balance being Fe and unavoidable impurities. In the austenitic stainless steel of the present invention, Zr, Ta, and Ti are precipitated as precipitates of one or more kinds of oxide particles, carbide particles, nitride particles, and composite particles thereof.

Zr, Ta, and Ti are added in order to stabilize oxygen present in the steel and to be precipitated as oxide particles. Oxygen contained in the steel is known as a factor that may deteriorate the mechanical properties, particularly toughness, and also lower the intergranular corrosion resistance of the stainless steel. Therefore, Zr, Ta, and Ti having a high affinity for oxygen are added to stabilize oxygen and improve the mechanical properties. Furthermore, Zr, Ta, and Ti have a high affinity for carbon and nitrogen as well as oxygen, and stabilize these elements in the steel and form precipitates. By receiving heat generated by, for example, welding, carbon in the stainless steel becomes a factor that precipitates Cr carbides on a grain boundary, and lowers the Cr concentration near the grain boundary to cause stress corrosion cracking. Nitrogen lowers the resistance to irradiation of the stainless steel, and accelerates irradiation-induced intergranular segregation. Stabilizing these elements by the addition of Zr, Ta, and Ti contributes to an improvement in the mechanical properties, resistance to irradiation, and corrosion resistance of the stainless steel.

Preferably, oxygen, carbon, and nitrogen are stabilized by Zr, Ta, and Ti and do not remain in the parent phase. Thus, Zr, Ta, and Ti are added in enough amounts to stabilize all the oxygen, carbon, and nitrogen, the amounts being neither stoichiometrically excessive nor deficient. The addition in stoichiometrically excessive amounts is not desirable, because such addition may form intermetallic compounds, leading to deterioration of mechanical properties.

The additive amounts of Zr, Ta, and Ti are determined within the following ranges in accordance with correlation formulas, where the amounts of oxygen, carbon, nitrogen contained in steel are expressed by X%, Y%, and Z% respectively.

(Correlation formulas)

$$Zr: 0.2 \leq 2.85X + 7.60Y + 6.52Z \leq 2.8$$

$$Ta: 0.4 \leq 4.52X + 15.0Y + 12.9Z \leq 5.0$$

$$Ti: \ 0.2 \leq 1.50X + 3.99Y + 3.42Z \leq 2.6$$

The additive amounts may be increased, as necessary, from the above amounts in order to stabilize oxygen, carbon, and nitrogen inevitably mixed during the production process. In the present invention, the amounts of oxygen, carbon, and nitrogen mixed during the production process are 0.1 wt% or less, 0.07 wt% or less, and 0.02 wt% or less respectively. The minimum value of the additive amount is 0 wt%, and the maximum value thereof is an enough amount to stabilize all the oxygen, carbon, and nitrogen, and is neither stoichiometrically excessive nor deficient. Preferably, by a preliminary experiment, an oxygen amount $\alpha$%, a carbon amount $\beta$%, and a nitrogen amount $\gamma$% to be mixed during the production process are estimated and determined according to the following correlation formulas. Excessively added Zr, Ta, and Ti may each form intermetallic compounds and cause deterioration of mechanical properties.
(Correlation formulas)

$$Zr: \ 2.85\alpha + 7.60\beta + 6.52\gamma$$

$$Ta: \ 4.52\alpha + 15.0\beta + 12.9\gamma$$

$$Ti: \ 1.50\alpha + 3.99\beta + 3.42\gamma$$

Furthermore, if necessary, predetermined amounts of Zr, Ta, and Ti are made into a solid solution state in addition to the above additive amounts. When these oversized elements are made into solid solutions in the parent phase, the elements serve as a trap site of irradiation defects, and have an effect of promoting recombination of the irradiation defects and suppressing the irradiation-induced segregation. Therefore, it is expected to suppress intergranular Cr deficiency due to irradiation-induced intergranular segregation, and to lower susceptibility to the irradiation-induced stress corrosion cracking. If these elements are excessively added, on the other hand, the elements form intermetallic compounds, which is not preferable.
As described above, the additive amounts of Zr, Ta, and Ti are determined so as to satisfy the following relational formulas, where the amounts of oxygen, carbon, nitrogen are X%, Y%, and Z% by weight respectively, and the amounts of Zr, Ta, Ti are X%, Y%, and Z% by weight respectively.
By determining the additive amounts of Zr, Ta, and Ti so as to satisfy the relationship:

$$2.85X + 7.60Y + 6.52Z \leq A \ ... \ (Formula \ 1)$$

$$4.52X + 15.0Y + 12.9Z \leq B \ ... \ (Formula \ 2)$$

$$1.50X + 3.99Y + 3.42Z \leq C \ ... \ (Formula \ 3),$$

the amounts of oxygen, carbon, and nitrogen remaining in the parent phase without being stabilized can be reduced, making it possible to improve the mechanical properties, resistance to irradiation, and corrosion resistance of the stainless steel.
In austenitic stainless steel of the present invention, the precipitates that are precipitated as one or more kinds of the oxide particles, carbide particles, nitride particles, and composite particles thereof serve as a pinning site that suppresses the coarsening of crystal grain boundaries and the movement of dislocations and as a trap site of irradiation defects, and contribute to an improvement in mechanical strength and resistance to irradiation. According to the models of Orowan and Ansell, as for precipitated particles, the finer the size and the higher the precipitation density, the better, in terms of mechanical strength. From the viewpoint of suppressing coarsening of crystal grains, a pinning effect of the crystal grains is observed when the grain diameter is 0.1 $\mu$m or less and, allegedly, the grain diameter of 0.05 $\mu$m or

less is more preferable. From the viewpoint of resistance to irradiation, the higher the number density of precipitates, the better. An effect of suppressing irradiation defect aggregation can be observed when the number density is on the order of $10^{22}$ m$^{-3}$. It is assumed in the present invention that precipitates having a grain diameter of 0.1 $\mu$m or less are dispersed at a number density of $1.0 \times 10^{22}$ m$^{-3}$ or higher.

The parent phase structure in the austenitic stainless steel according to the present invention is an austenite single-phase structure in order to improve corrosion resistance.

Cr contained in the austenitic stainless steel of the present invention is an element that improves the corrosion resistance of alloy and stabilizes an austenite structure, and the additive amount thereof is preferably 16% or more. If excessively added, Cr may form the $\sigma$ phase and deteriorate the material properties, and thus the additive amount of Cr in the present invention is 16 to 26%. To obtain a more stable austenite phase, the Cr content is preferably 18 to 20%.

Ni contained in the austenitic stainless steel of the present invention contributes to the corrosion resistance, and the stability of the austenite phase. However, excessively added Ni is not preferable because such Ni may cause deterioration of the mechanical properties or precipitation of an embrittling phase. Therefore, the additive amount of Ni in the present invention is 8 to 22%. To obtain a more stable austenite phase, the Ni content is preferably 8 to 12%.

The hall-petch equation empirically holds for the relationship between the crystal grain diameter and the mechanical strength. The finer the crystal grains, the higher the tensile strength. When the grains in iron are made finer up to about 5 $\mu$m, the tensile strength becomes about 1.5 times as high as a normal material (average crystal grain diameter of several tens of micrometers). There is also a characteristic of not losing ductility, and it can be said that the smaller the average crystal grain diameter, the better, in terms of the mechanical strength. The miniaturization of the crystal grains can increase the total length of the crystal grain boundaries that are defect sink sites. Thus, the smaller the grain diameter, the better, also in terms of resistance to irradiation.

The miniaturization of the crystal grains is also known to improve corrosion resistance, and is preferable in terms of any of mechanical strength, resistance to irradiation, and corrosion resistance. In the present invention, the average crystal grain diameter is 5 $\mu$m or less, and preferably ultrafine grains of 1 $\mu$m or less are applied.

The austenitic stainless steel of the present invention is produced as follows. Alloy powder or mixed powder satisfying the aforementioned composition is subjected to mechanical alloying in a ball mill or an attritor. The resultant powder is encapsulated in a vacuum container and solidified and molded by any of hot isostatic pressing, hot extrusion, and hot rolling. The solidifying and molding temperature is preferably 800°C or higher in order to achieve a satisfactory bond between the powder, and the solidification and molding are carried out at equal to or less than 1200°C, which is a solution heat treatment temperature. The higher the treatment temperature, the easier the coarsening of the crystal grains. Therefore, solidification and molding at too high a temperature are not preferable.

Machining processes such as forging and rolling are optionally applied to the solidified and molded material. Alloy produced by solidifying and molding powder has a weak bond at a former powder boundary, leading to the deterioration of the mechanical strength. Therefore, by means of the above processes, the density is increased and the bond between the powder is strengthened, thereby improving the mechanical properties. The temperature at the time of implementing the processes is preferably from 800°C to 1200°C in a similar manner to the solidifying and molding process.

Furthermore, heat treatment is performed in order to homogenize the structure of, and remove distortion from, the solidified and molded alloy. The treatment temperature is 800°C to 1200°C in the same manner as the solidifying and molding temperature.

(Example)

In an example shown below, it was confirmed that the materials of the present invention exhibited good characteristics. First, Table 1 shows the chemical compositions of the materials produced in this example.

[Table 1]

| No. | C | P | Ni | Mn | Cr | Si | O | N | Zr | Ta | Ti | Fe |
|---|---|---|---|---|---|---|---|---|---|---|---|---|
| 1 | 0.013 | 0.006 | 11.4 | 0.1 | 19.7 | 0.8 | 0.28 | 0.03 | 1.56 | - | | Bal. |
| 2 | 0.016 | 0.003 | 11.6 | 0.1 | 19.8 | 0.8 | 0.26 | 0.04 | 1.11 | - | | Bal. |
| 3 | 0.016 | 0.003 | 11.6 | 0.1 | 19.8 | 0.8 | 0.26 | 0.04 | 0.56 | - | | Bal. |
| 4 | 0.009 | 0.004 | 10.9 | 0.1 | 18.8 | 0.7 | 0.34 | 0.03 | - | 2.94 | | Bal. |
| 5 | 0.016 | 0.003 | 11.6 | 0.1 | 19.8 | 0.8 | 0.26 | 0.04 | - | 1.90 | | Bal. |
| 6 | 0.016 | 0.003 | 11.6 | 0.1 | 19.8 | 0.8 | 0.26 | 0.04 | - | 0.96 | | Bal. |
| 7 | 0.016 | 0.003 | 11.6 | 0.1 | 19.8 | 0.8 | 0.26 | 0.04 | - | - | 1.41 | Bal. |

(continued)

| No. | C | P | Ni | Mn | Cr | Si | O | N | Zr | Ta | Ti | Fe |
|---|---|---|---|---|---|---|---|---|---|---|---|---|
| 8 | 0.016 | 0.003 | 11.6 | 0.1 | 19.8 | 0.8 | 0.26 | 0.04 | - | - | | Bal. |
| 9 | 0.016 | 0.003 | 11.6 | 0.1 | 19.8 | 0.8 | 0.26 | 0.04 | - | - | | Bal. |

Nos. 1 to 7 are materials that satisfy the basic composition of the austenitic stainless steel of the present invention. Zr is added to Nos. 1, 2, and 3 as a stabilizing element. Zr is added to No. 1 in an enough amount to satisfy the relationship of (Formula 1) and make a predetermined amount of solid solution. Zr is added to No. 2 in an enough amount to satisfy the relationship of (Formula 1). Zr is added to No. 3 in an amount necessary to stabilize 50% of each of oxygen, carbon, and nitrogen in the steel. Ta is added to Nos. 4, 5, and 6 as a stabilizing element. Ta is added to No. 4 in an enough amount to satisfy the relationship of (Formula 2) and make a predetermined amount of solid solution. Ta is added to No. 5 in an enough amount to satisfy the relationship of (Formula 2). Ta is added to No. 6 in an amount necessary to stabilize 50% of each of oxygen, carbon, and nitrogen in the steel. Ti is added to No. 7 as a stabilizing element, in an enough amount to satisfy the relationship of (Formula 3) and make a predetermined amount of solid solution.

These samples of Nos. 1 to 7 were obtained by subjecting powder (SUS304L powder) serving as base steel and the additive element powder (Zr, Ta, Ti) to mechanical alloying by using a planetary ball mill. The powder subjected to mechanical alloying was encapsulated in a vacuum container, and vacuum deaeration was performed for three hours at 400°C and $10^{-4}$ torr. The resultant powder was then solidified and molded through hot extrusion at 1100°C. Thereafter, hot forging was performed at 1100°C in order to further tighten the bond between the powder. The resultant material was subjected to a solution treatment for 30 minutes at 1100°C as a final thermal treatment.

Meanwhile Nos. 8 and 9 are SUS304L serving as a comparative material. No. 8 was obtained as follows. SUS304L powder subjected to mechanical alloying was encapsulated in a vacuum container, and vacuum deaeration was performed for three hours at 400°C and $10^{-4}$ torr. The resultant powder was then solidified and molded through hot extrusion at 1100°C. Thereafter, hot forging was performed at 1100°C in order to further tighten the bond between the powder. The resultant material was subjected to a solution treatment for 30 minutes at 1100°C as a final thermal treatment. No. 9 was obtained as follows. SUS304L atomized powder not subjected to mechanical alloying was encapsulated in a vacuum container, and vacuum deaeration was performed for three hours at 400°C and $10^{-4}$ torr. The resultant powder was then solidified and molded through hot extrusion at 1100°C. Thereafter, hot forging was performed at 1100°C in order to further tighten the bond between the powder. The resultant material was subjected to a solution treatment for 30 minutes at 1100°C as a final thermal treatment.

[Table 2]

| No. | Average crystal grain diameter [μm] | Grain size [nm] | Number density of grains [$\times 10^{22}$ m$^{-3}$] |
|---|---|---|---|
| 1 | 0.92 | 19 | 6.3 |
| 2 | 1.02 | 24 | 4.2 |
| 3 | 1.82 | 17 | 1.9 |
| 4 | 2.41 | 25 | 2.2 |
| 5 | 2.96 | 31 | 1.4 |
| 6 | 3.54 | 27 | 1.1 |
| 7 | 0.98 | 22 | 3.8 |
| 8 | 20 | 140 | 0.03 |
| 9 | 35 | 137 | 0.02 |

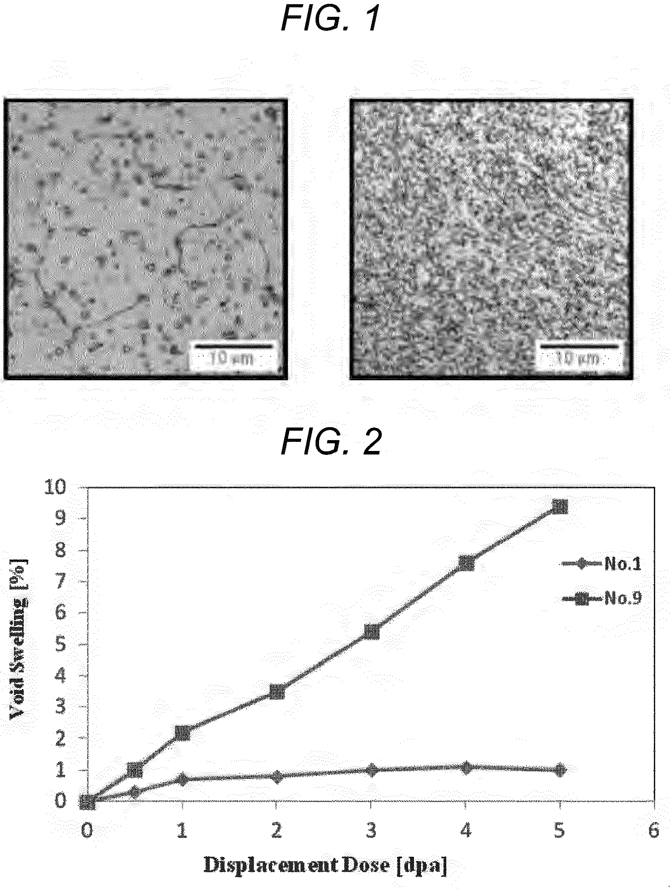

Table 2 shows the average crystal grain diameters, the grain sizes, and the number densities of the grains of the materials of the present invention and the comparative materials. FIG. 1 representatively shows structure photos of the material of the present invention No. 1 and the comparative material No. 9. In the materials of the present invention Nos. 1 to 7 to which the stabilizing elements were added, fine precipitates were precipitated at a high density, and the average crystal grain diameters thereof were all decreased to about 5 μm or less. The average crystal grain diameter of the comparative material No. 8, i.e., SUS304L subjected to mechanical alloying, on the other hand, was 20 μm and coarse precipitates were formed. In the sample No. 9 not subjected to mechanical alloying, the crystal grain diameter was further increased up to 35 μm on average. It is shown that in all of the materials of the present invention, the crystal grain diameter is smaller than those of the comparative materials, miniaturization of the crystal grains is achieved by mechanical alloying, and the fine precipitates of the additive elements that are precipitated at a higher density are effective for suppressing coarsening of the crystal grains. It is also shown through comparison between Nos. 1, 2 and No. 3 and between Nos. 4, 5 and No. 6 that, the higher the number density of grains, the finer the crystal grains, and that a larger amount of pinning grains can further suppress the coarsening of the crystal grains. According to this result, it can be said that the additive amounts of the stabilizing elements are preferably large enough to stabilize all the oxygen, carbon, and nitrogen contained in the steel and all the oxygen, carbon, and nitrogen to be mixed during the production.

[Table 3]

| No. | Vickers hardness |
| --- | --- |
| 1 | 313 |
| 2 | 302 |
| 3 | 288 |
| 4 | 280 |
| 5 | 275 |
| 6 | 271 |
| 7 | 299 |
| 8 | 195 |
| 9 | 192 |

Table 3 shows the results of a Vickers hardness test carried out on the materials of the present invention and the comparative materials. The hardness of the comparative material No. 8 is 195 Hv, which is substantially equal to that of general stainless steel. It can be said that the coarse precipitates of 0.1 $\mu$m or more, which are coarsely precipitated, hardly contribute to the improvement of the mechanical strength. Meanwhile, it is found that the hardness of the materials of the present invention is significantly higher than that of the comparative materials, i.e., 313 Hv for No. 1 and 280 Hv for No. 4. In the results, the smaller the average crystal grain diameter, the higher the hardness. Also according to this result, it can be said that the additive amounts of the stabilizing elements are preferably large enough to stabilize all the oxygen, carbon, and nitrogen contained in the steel and all the oxygen, carbon, and nitrogen to be mixed during the production.

[Table 4]

| No. | Weight increase ratio No. X/No. 9 |
| --- | --- |
| 1 | 0.95 |
| 3 | 0.97 |
| 4 | 0.98 |
| 6 | 1.02 |
| 9 | 1 |

Table 4 shows the results of an entire surface corrosion test carried out on the materials of the present invention (Nos. 1, 3, 4, and 6) and the comparative material (No. 9). The test results indicate relative values in the case where the corrosion weight increase of the comparative material No. 9 is set to 1. The test was carried out for 2000 hours as an immersion test under a light-water reactor environment (at 288°C, 8 MPa). The weight increases of the materials of the present invention were all substantially equal to or slightly better than that of the comparative material, and the same applies to the sample surface shape after the immersion test. Among the materials of the present invention, the finer the crystal grains, the smaller the weight increase. The results showed that the materials of the present invention had corrosion resistance similar to that of SUS316L. It can be said that the miniaturization of the crystal grain boundaries is preferable for improving the corrosion resistance.

[Table 5]

| No. | Presence/absence of crack |
|-----|---------------------------|
| 1 | 0/7 |
| 3 | 0/7 |
| 4 | 0/7 |
| 6 | 1/7 |
| 9 | 3/7 |

The susceptibility to stress corrosion cracking was evaluated under a high-temperature, high-pressure water environment. The creviced bent beam (CBB) test was employed. In the test, an immersion test was carried out for 2000 hours at 288°C and a dissolved oxygen concentration of 8 ppm, and this test was carried out seven times on one sample. All of the samples used were subjected to 40% cold working. Table 5 shows the results of evaluating occurrence of a crack in the test pieces. A crack having a depth of 50 $\mu$m or more was defined as the crack. The test was carried on the materials of the present invention (Nos. 1, 3, 4, and 6) and the comparative material (No. 9). In the comparative material No. 9, cracks were formed on multiple test pieces, while no crack was observed on Nos. 1 and 4 to which elements were added in enough amounts to stabilize all oxygen, carbon, and nitrogen. Meanwhile, a crack was observed on one test piece in the material of the present invention No. 6. It is known that stress corrosion cracking is reduced with a decrease in the amount of a solid solution of C. Reducing the amount of a solid solution of C by adding the stabilizing elements was shown to be effective. The crack was formed on No. 6 in which the additive amounts were suppressed to stabilize only 50% of the oxygen, carbon, and nitrogen. Therefore, it was shown that the additive amounts of the stabilizing elements are preferably large enough to stabilize all the oxygen, carbon, and nitrogen in consideration of resistance to SCC characteristics.

FIG. 2 shows results of an electron beam irradiation test carried out on the material of the present invention and the comparative material, the test being carried out for studying the dose dependence of void swelling. The irradiation was carried out at electron beam energy of 1.0 MeV and a sample temperature of 500°C. As a result, in the comparative material No. 9, the void swelling increased with an increase in the irradiation dose through the irradiation, and reached about 10% in the experiment range. In the material of the present invention No. 1, on the other hand, the void swelling occurred along with the irradiation but showed little change after around 1 dpa. The void swelling was about 1%. This is considered to be because fine crystal grains and precipitated particles function as a sink site or a trap site of irradiation defects. It can be said that the material of the present invention is better than SUS316L, which is a comparative material, in terms of resistance to irradiation.

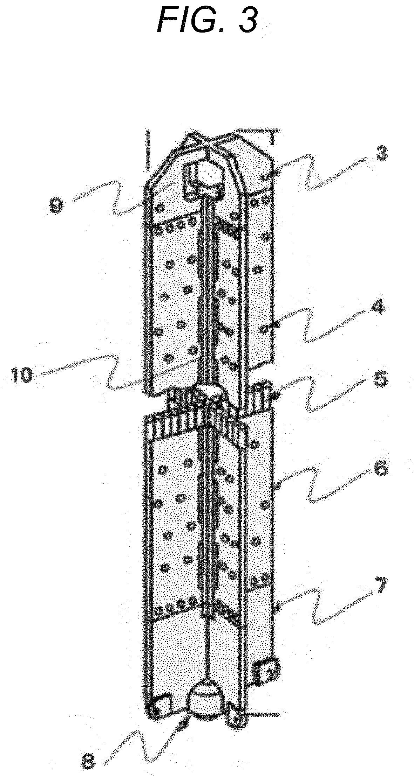

An application example of the austenitic stainless steel of the present invention is described below, in which example the austenitic stainless steel is applied to a reactor internal structure and a control rod. The control rod has the highest rate of neutron irradiation damage among the devices. FIG. 3 shows an example in which boron carbide is used as a neutron absorbing material. The control rod mainly includes a tie rod 10, a handle 9, a connector 7, a sheath 6, and a neutron absorbing rod 5, all of which include austenitic stainless steel. In the control rod which receives high neutron irradiation dose, irradiation-induced stress corrosion cracking is likely to occur. Therefore, the dispersion-strengthened austenitic stainless steel of the present invention excellent in mechanical properties, corrosion resistance, resistance to irradiation, resistance to irradiation-induced stress corrosion cracking, and resistance to stress corrosion cracking is used. This can suppress the irradiation-induced stress corrosion cracking of the control rod, and thus a highly reliable control rod having a long service life can be obtained. In addition, the austenitic stainless steel of the present invention can be produced as members of various shapes, such as a rod, a sheet, and a tube. Therefore, the austenitic stainless steel can be applied not only to a control rod using boron carbide, but also to a control rod using hafnium for a neutron absorbing material.

Irradiation-induced stress corrosion cracking is likely to occur in austenitic stainless steel that has conventionally been used in a reactor, upon irradiation with neutrons having energy of 0.1 MeV or higher at $0.5 \times 10^{21}$ n/ cm$^2$ or more. Therefore, the austenitic stainless steel is applicable not only to the control rod but also to other reactor inner structures and devices in which irradiation-induced stress corrosion cracking is likely to occur upon neutron irradiation. For example, the austenitic stainless steel of the present invention can be used in a core shroud, a top guide, a core support plate, a baffle plate, a former plate, or a baffle former bolt, whereby the reactor and the nuclear power plant can be made highly reliable.

**Claims**

1. Austenitic stainless steel containing Cr: 16 to 26%, Ni: 8 to 22%, O: 0.02 to 0.4%, C: 0.08% or less, and N: 0.1% or less by weight, and further containing at least one kind of Zr: 0.2 to 2.8%, Ta: 0.4 to 5.0%, and Ti: 0.2 to 2.6%, the balance being Fe and unavoidable impurities,
wherein Zr, Ta, and Ti are precipitated as precipitates of one or more kinds of oxide particles, carbide particles, nitride particles, and composite particles thereof.

2. The austenitic stainless steel according to claim 1, satisfying the following relational formula in a case where amounts of oxygen, carbon, and nitrogen are expressed by X%, Y%, and Z% by weight respectively, and an additive amount of Zr is expressed by A% by weight:

$$2.85X + 7.60Y + 6.52Z \leq A.$$

3. The austenitic stainless steel according to claim 1, satisfying the following relational formula in a case where amounts of oxygen, carbon, and nitrogen are expressed by X%, Y%, and Z% by weight respectively, and an additive amount of Ta is expressed by B% by weight:

$$4.52X + 15.0Y + 12.9Z \leq B$$

4. The austenitic stainless steel according to claim 1, satisfying the following relational formula in a case where amounts of oxygen, carbon, and nitrogen are expressed by X%, Y%, and Z% by weight respectively, and an additive amount of Ti is expressed by C% by weight:

$$1.50X + 3.99Y + 3.42Z \leq C$$

5. The austenitic stainless steel according to claim 1, wherein an average crystal grain diameter of a base layer is 5 $\mu$m or less.

6. The austenitic stainless steel according to claim 1, wherein the precipitates having a grain diameter of 0.1 $\mu$m or less are precipitated at a number density of $1.0 \times 10^{22}$ m$^{-3}$ or higher.

7. A method for producing austenitic stainless steel, comprising:

alloying, through mechanical alloying treatment, alloy powder containing Cr: 16 to 26%, Ni: 8 to 22%, O: 0.02 to 0.4%, C: 0.08% or less, and N: 0.1% or less by weight, and further containing at least one kind of Zr: 0.2 to 2.8%, Ta: 0.4 to 5.0%, and Ti: 0.2 to 2.6%, the balance being Fe and unavoidable impurities, or mixed powder satisfying the composition;
encapsulating the powder in a container under vacuum; and
solidifying and molding the powder at 800°C to 1200°C.

8. The method for producing austenitic stainless steel according to claim 7, wherein an additive amount of Zr is determined so as to satisfy the following relational formula in a case where amounts of oxygen, carbon, and nitrogen are expressed by X%, Y%, and Z% by weight respectively, and the additive amount of Zr is expressed by A% by weight:

$$2.85X + 7.60Y + 6.52Z \leq A.$$

9. The method for producing austenitic stainless steel according to claim 7, wherein an additive amount of Ta is determined so as to satisfy the following relational formula in a case where amounts of oxygen, carbon, and nitrogen are expressed by X%, Y%, and Z% by weight respectively, and the additive amount of Ta is expressed by B% by weight:

$$4.52X + 15.0Y + 12.9Z \leq B$$

10. The method for producing austenitic stainless steel according to claim 7, wherein an additive amount of Ti is determined so as to satisfy the following relational formula in a case where amounts of oxygen, carbon, and nitrogen are expressed by X%, Y%, and Z% by weight respectively, and the additive amount of Ti is expressed by C% by weight:

$$1.50X + 3.99Y + 3.42Z \leq C$$

11. The method for producing austenitic stainless steel according to claim 7, wherein the solidified and molded steel is subjected to a machining process at 800°C to 1200°C.

12. A reactor internal structure to be used under a neutron irradiation environment, wherein at least one component constituting the reactor internal structure includes the austenitic stainless steel according to claim 1.

13. The reactor internal structure according to claim 12, wherein the reactor internal structure is a control rod.

## FIG. 1

## FIG. 2

# FIG. 3

## INTERNATIONAL SEARCH REPORT

| International application No. |
| --- |
| PCT/JP2015/057971 |

### A. CLASSIFICATION OF SUBJECT MATTER

*C22C38/00*(2006.01)i, *B22F1/00*(2006.01)i, *B22F3/15*(2006.01)i, *C22C38/50*(2006.01)i, *G21D1/00*(2006.01)i

According to International Patent Classification (IPC) or to both national classification and IPC

### B. FIELDS SEARCHED

Minimum documentation searched (classification system followed by classification symbols)
C22C38/00, B22F1/00, B22F3/15, C22C38/50, G21D1/00

Documentation searched other than minimum documentation to the extent that such documents are included in the fields searched
Jitsuyo Shinan Koho         1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2002-256400 A  (Hitachi, Ltd.), 11 September 2002 (11.09.2002), | 1,2,4-8,10, 11 |
| Y | tables 1, 3; claims; paragraphs [0009], [0029], [0054], [0057]; examples & US 2002/0164259 A1    & EP 1234894 A1 | 1-13 |
| Y | JP 2014-080664 A  (Hitachi-GE Nuclear Energy, Ltd.), 08 May 2014 (08.05.2014), claims; paragraphs [0002], [0011] (Family: none) | 1-13 |
| Y | JP 10-204586 A  (Hitachi, Ltd.), 04 August 1998 (04.08.1998), claims; paragraph [0021]; table 1 (Family: none) | 1-13 |

☒  Further documents are listed in the continuation of Box C.      ☐  See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 17 April 2015 (17.04.15) | 28 April 2015 (28.04.15) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (July 2009)

**INTERNATIONAL SEARCH REPORT**

International application No.

PCT/JP2015/057971

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 5-59494 A  (Hitachi, Ltd.),<br>09 March 1993 (09.03.1993),<br>claims; tables 1, 2; paragraph [0013]<br>& US 5316597 A           & EP 530725 A1 | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8337853 A

- JP 2002285289 A